# EUROPEAN PATENT APPLICATION

(11) **EP 1 364 581 A1**
(43) Date of publication of application: **26.11.2003**
(21) Application number: 03009880.0
(22) Date of filing: 15.05.2003
(51) Int. Cl.: A22C 9/00

(54) **Meat processing machine, particularly for pounding**

(30) Priority: 21.05.2002 IT TV20020060
(71) Applicant: Maccari, Remo, 31020 San Pietro di Feletto (Prov. of Treviso) (IT)
(72) Inventor: Maccari, Remo, 31020 San Pietro di Feletto (Prov. of Treviso) (IT)
(74) Representative: Modiano, Guido, Dr.-Ing.

(57) **Abstract**

A machine (1) for processing meat, particularly for pounding, comprising a supporting frame (2) for first means (16) for conveying pre-sliced portions of meat toward at least one pair of first rotating rollers (20a, 20b) which are arranged so that their axis is approximately horizontal and lie side by side at a preset distance from each other; second means for removing the processed meat portions being associated with the frame below the first rotating rollers.

## Description

The present invention relates to a meat processing machine, particularly for pounding pieces of meat such as for example chicken breasts or boned steaks.

It is certainly known that animal meat intended to satisfy nutritional requirements, once butchered and cut, must be subjected to further processes and/or treatments that precede the final step of packaging.

These processes include for example pounding, which consists in flattening and/or reducing the thickness of previously cut portions of meat.

This type of process is performed so as to facilitate the reduction of the thickness of the cut meat portion, at the same time increasing its tenderness and more generally making it more suitable for subsequent cooking.

Usually, the processes cited above are performed manually, even in mass-production environments, in which extreme process automation is required.

Meat portions intended for subsequent packaging are in fact usually processed by personnel specialized in the treatment of animal meat and therefore for example by expert butchers.

The butchers, in order to perform such processes, usually use manual devices commonly known as pounders, which are constituted by a handle below which there is a cylindrical body, having for example a flat base, for pounding the meat.

The flattening and/or thickness reduction of the portion of meat occurs by repeatedly striking the meat with the pounders: such pounding requires considerable attention and experience on the part of the operator in order to avoid damaging the nutritional and organoleptic integrity of the meat thus processed.

A first drawback that can be observed in the use of the pounders is the fact that the processing of the meat, by being totally manual, requires the operator to spend considerable time, with evident limitations to the overall production rate that can be achieved.

There is also the problem related to the inevitable tiredness and fatigue felt, after a certain period of time, even by the most expert and strongest operators, who are sometimes forced to suspend work in order to rest.

This causes another drawback related to the further reduction of the production rate, which is already limited in itself, due to the interruptions in the work of the operators and to an inevitable decrease in the intensity of their work during periods of tiredness and fatigue.

Since these processes are inherently delicate, they require at all times a certain manual dexterity and considerable concentration on the part of the operator, who might otherwise pound the meat incorrectly, with consequent uneven processing and even with possible alterations of its organoleptic characteristics.

This is particularly true for delicate meat portions, such as for example chicken breasts, for which incorrect pounding can entail damage to said meat, with degradation of its nutritional characteristics.

Another drawback noted in the use of said pounders is the physical wear to which the operators are subjected owing to the repetitive execution of an action that is demanding both on the muscles and on the joints.

The aim of the present invention is to solve the above-mentioned problems, eliminating the drawbacks of the cited prior art, by providing a meat processing machine that allows to optimize pounding operations while ensuring preservation of the organoleptic and nutritional characteristics possessed by the meat before the process.

Within this aim, an object of the invention is to provide a machine that allows to process meat portions very rapidly.

Another object is to provide a machine that is per se versatile, i.e., allows to process various kinds of meat.

A further object is to provide a machine that allows to process substantially uniformly a large number of meat portions.

A still further object is to provide a machine that can be used by an operator for a long period of time without causing tiredness and physical fatigue in the operator.

Another object is to provide a machine that can be used even by operators with limited experience in the field of animal meat processing.

Another object is to provide a machine that is structurally simple and has reduced maintenance costs.

Another object is to provide a machine that can be modified easily so as to be able to process in an optimum manner also portions of meat that have significantly variable shapes and weights.

Another object is to provide a meat processing machine that associates with the preceding characteristics that of having low manufacturing costs and can be obtained with usual known machines and equipment.

This aim and these and other objects that will become better apparent hereinafter are achieved by a meat processing machine, particularly for pounding, characterized in that it comprises a supporting frame for first means for conveying pre-sliced portions of meat toward at least one pair of first rotating rollers which are arranged so that their axis is approximately horizontal with respect to the ground and lie side by side at a preset distance from each other, second means for removing said processed meat portions being associated with said frame below said first rollers.

Further characteristics and advantages of the invention will become better apparent from the following detailed description of a particular embodiment thereof, illustrated only by way of non-limitative example in the accompanying drawings, wherein:

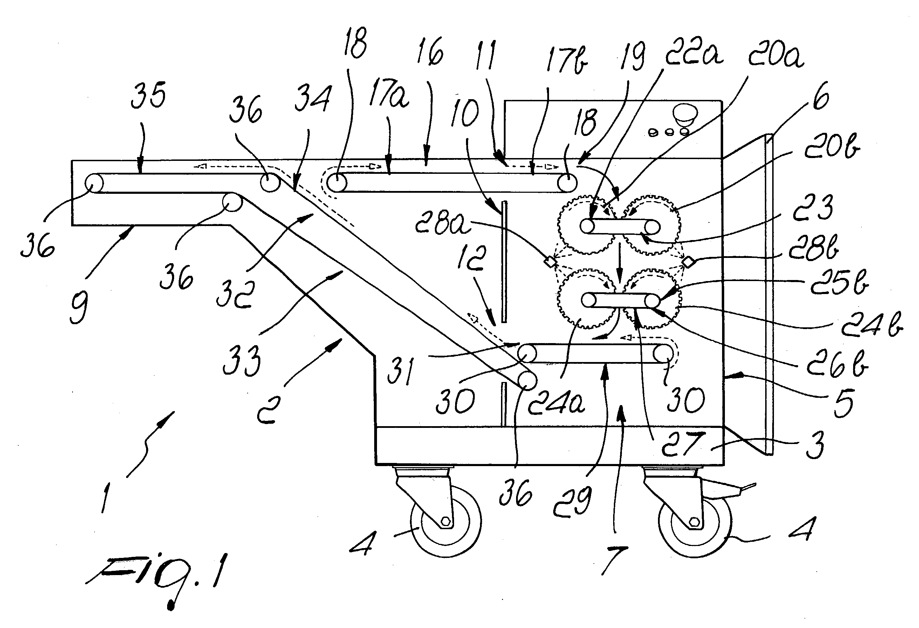

Figure 1 is a front view of a meat processing machine according to the invention;

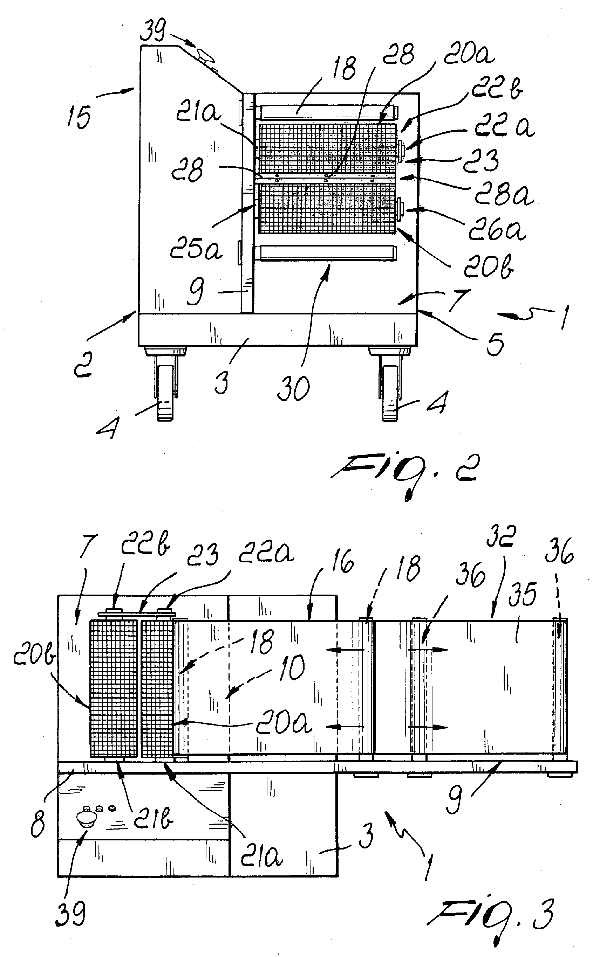

Figure 2 is a partially sectional side view of the machine;

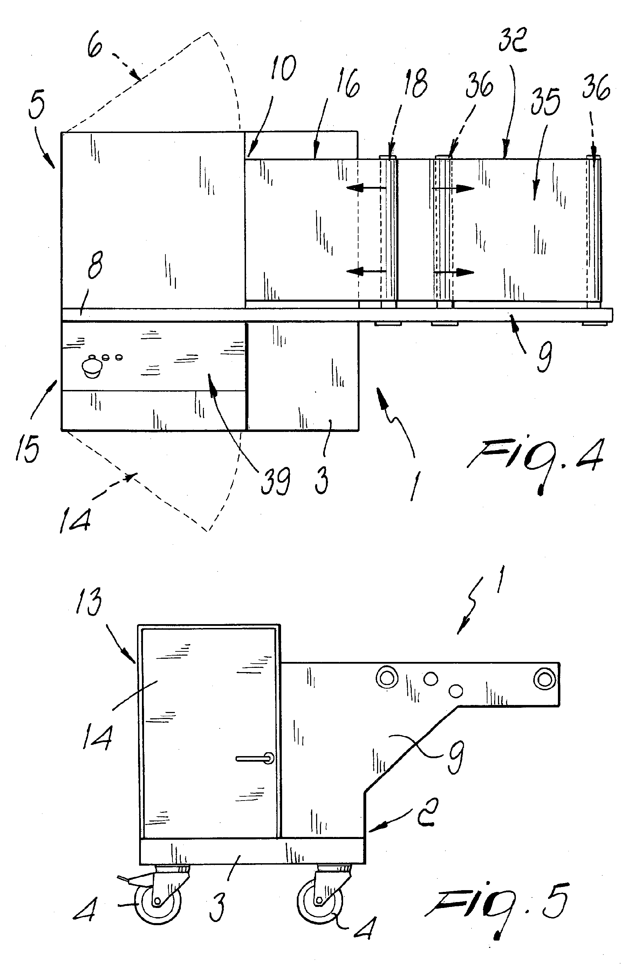

Figure 3 is a partially sectional top view of the machine;
Figure 4 is a top view of the machine;
Figures 5 and 6 are two different rear views of the machine;
Figure 7 is a view of a detail of the invention of Figure 1.

With reference to the figures, the reference numeral 1 designates a meat processing machine, particularly for pounding pre-sliced portions of meat, such as for example chicken breasts or boned steaks.

The machine 1 comprises a frame 2, which has a footing 3 that is arranged approximately horizontally and has, in the particular embodiment shown in the figures, in a lower region, a plurality of ground support wheels 4 which are suitable for moving the machine 1.

The frame 2 comprises a first box-like enclosure 5, which is shaped approximately like a parallelepiped and is associated with, or monolithically coupled to, the footing 3 in an upper region and is provided at the front with a first door 6.

The door is articulated to the first box-like enclosure 5 and allows to inspect a first compartment 7 that is formed inside the first enclosure 5.

The first enclosure 5 has a rear wall 8, which is part of a shoulder 9, which is also associated with, or monolithically coupled to, the footing 3 in an upper region and protrudes from it.

The first enclosure 5 also has, at one of its side walls 10 that is adjacent to the shoulder 9, a first opening, such as for example a first slot 11, which is substantially rectangular and approximately horizontal.

The first enclosure 5 also has a second slot 12, which is formed below the first slot 11 and has substantially the same shape and orientation as said first slot.

The frame 2 also comprises a second box-like enclosure 13, whose shape is similar to that of the first enclosure 5; the second enclosure is also associated with, or monolithically coupled to, the footing 3 in an upper region.

As an alternative, the first and second enclosures 5 and 13 may be obtained together, so as to form internally one or more separate compartments.

The second enclosure 13 is arranged adjacent to the rear wall 8 and is also provided with a second door 14, which is arranged at the region that lies opposite the region of the first door 6.

The second door 14, articulated to the second box-like enclosure 5, allows to inspect a second compartment 15, which is formed inside the second enclosure 13.

First means for conveying pre-sliced meat portions into the first compartment 7 protrude approximately horizontally in front of the shoulder 9 and are constituted for example by a first conveyor belt 16 that lies on a substantially horizontal plane.

The first conveyor belt 16 is associated with the shoulder 9 approximately at the same height as the first slot 11 of the first enclosure 5, so as to have a first region 17a that is external to the first enclosure 5 and a second region 17b that is internal to the enclosure, i.e., accommodated in the first compartment 7.

More particularly, the first conveyor belt 16, arranged horizontally through the first slot 11, is guided at its ends around two first auxiliary shafts 18, one of which is pivoted at the upper part of the shoulder 9, the other one being pivoted inside the first compartment 5 at the rear wall 8.

The first conveyor belt 16, which receives its advancement motion from the first auxiliary shafts 18, therefore allows to convey the pre-sliced meat portions, placed beforehand by the user on the first region 17a, into the first compartment 7, until they reach a third unloading region 19.

The third unloading region 19, after which the pre-sliced meat portions fall, is located above a pair of first rollers 20a and 20b, which are accommodated approximately transversely in the first compartment 7 of the first enclosure 5.

In the embodiment shown in the cited figures, the third unloading region 19 is preferably arranged above and near the first roller 20a.

The first rollers 20a and 20b, which lie axially along a direction that is approximately perpendicular to the rear wall 8, are substantially cylindrical and are arranged side by side at a preset distance from each other.

In this manner, the pre-sliced meat portions that fall from the third unloading region 19 are conveyed into the gap between the first rollers 20a and 20b.

The first rollers 20a and 20b are in particular keyed to a pair of first shafts 21a and 21b, which are pivoted approximately at right angles to the rear wall 8 so as to rotate about their own axes in mutually opposite directions.

The first shafts 21a and 21b have first free ends 22a and 22b, which are pivoted to a first spacer bar 23, which is suitable to increase the flexural rigidity of the first shafts 21a and 21b.

Below the first rollers 20a and 20b, again at the first compartment 7, there is also a pair of second rollers 24a and 24b, which also have a substantially cylindrical shape and lie axially along a direction that is preferably parallel to the direction of the first rollers 20a and 20b.

The second rollers 24a and 24b are mutually separated by a chosen gap, which determines a central axial distance that is substantially aligned vertically with the axial distance determined by the gap generated between the first rollers 20a and 20b.

Further, the second rollers 24a and 24b also are keyed to two second shafts 25a and 25b, which rotate in mutually opposite directions and are pivoted approximately at right angles to the rear wall 8 below the first shafts 21a and 21b.

The second shafts 25a and 25b have second free ends 26a and 26b, which are pivoted to a second spacer bar 27, which is also suitable to increase the flexural rigidity of the second shafts 25a and 25b.

The first compartment 7 advantageously accommodates a plurality of nozzles, designated by the reference numeral 28, which are functionally connected to a pump, not shown, that is suitable to supply the nozzles with water that can be drawn, for example, from an appropriately provided tank, also not shown, or directly from the water mains.

In the particular illustrated embodiment, the nozzles 28 protrude from two cross-members 28a and 28b, which are associated inside the first enclosure 5, along a direction that is substantially perpendicular to the rear wall 8.

More particularly, the cross-members 28a and 28b lie advantageously on the horizontal central plane that is equidistant from the first and second spacer bars 23 and 27.

The nozzles 28 are therefore arranged in succession and are mutually equidistant along the two cross-members 28a and 28b, with various orientations, for example directed toward the first rollers 20a and 20b, or the second rollers 24a and 24b, or toward the gap between said first and second rollers.

This arrangement allows the nozzles 28 to wet the first and second rollers 20a, 20b and 24a, 24b preferably along their entire axial extension.

Advantageously, the lateral surfaces of the first and second rollers 20a, 20b and 24a, 24b have a plurality of linear and/or concentric grooves, which are suitable to form a grid of protruding elements or blocks uniformly distributed along rows and columns that are mutually approximately perpendicular.

The blocks are approximately shaped like a truncated cone or pyramid, so as to produce a chosen compression of the pre-sliced portions of meat that pass between the first and second rollers 20a, 20b and 24a, 24b.

The directions of rotation of the first and second rollers 20a, 20b and 24a, 24b are such as to determine, at their respective gaps, a coordinated downward movement so as to allow to follow the portions of meat compressed thereat toward a second conveyor belt 29 that is suitable to carry them away.

The second conveyor belt 29 is arranged, below the pair of second rollers 24a, approximately at the same height as the second slot 12 of the side wall 10 and is accommodated in the first compartment 7.

The second conveyor belt 29, arranged on a substantially horizontal plane, is guided around two second auxiliary shafts 30, which are in turn pivoted at the rear wall 8.

The second conveyor belt 29, in the particular embodiment shown, has a fourth end region 31, which is arranged above and proximate to a third conveyor belt 32, which constitutes, together with the second conveyor belt 29, second means 33 suitable to transfer the portions of meat outside the first compartment 7.

The third conveyor belt 32 affects the second slot 12 so as to form a fifth flat region 34 that is accommodated inside and outside the first compartment 7 and is arranged obliquely so as to be directed upward.

The fifth region 34 is advantageously longer at the region outside the first enclosure 7, so as to be able to connect in an upper region to a sixth region 35, which is also flat, is external to the first compartment 7 and is arranged approximately horizontally, so as to form a configuration shaped approximately like an inverted letter V.

The sixth region 35 is advantageously arranged approximately on the same plane as the first conveyor belt 16 and adjacent thereto.

The third conveyor belt 32 is guided around third auxiliary shafts 36, which are arranged at the free ends and at the connecting point between the fifth region 34 and the sixth region 35.

More particularly, one of the third auxiliary shafts 36, which forms the lower end of the third belt 32, is accommodated within the first compartment 7, at a region that is adjacent to the second belt 29 and lies below it, and is therefore pivoted approximately at right angles to the rear wall 8.

The remaining third auxiliary shafts 36 are pivoted approximately at right angles to the shoulder 9 and are therefore arranged outside the first compartment 7.

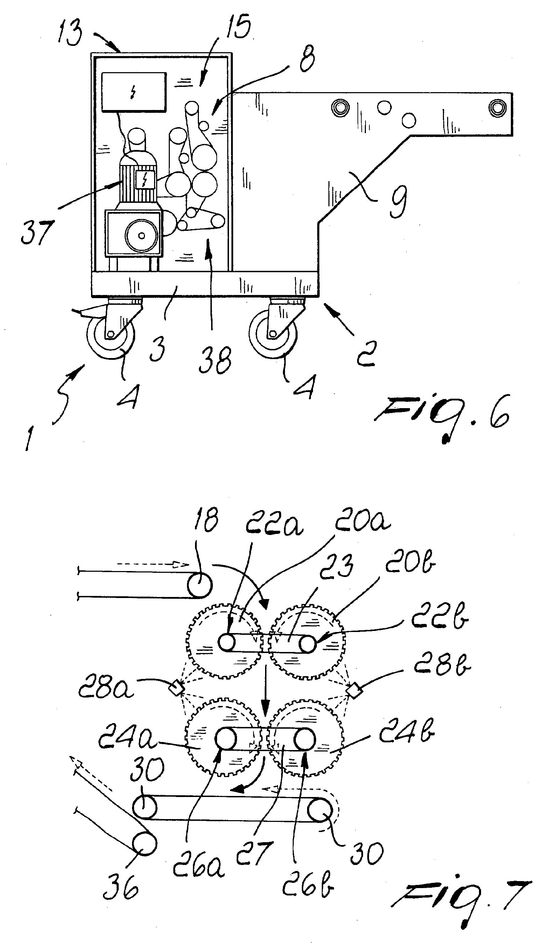

The first belt 16, the second belt 29 and the third belt 32, as well as the first and second rollers 20a, 20b and 24a, 24b, which are mutually synchronized, are functionally connected to at least one source of motion. With reference to the embodiment shown in Figure 6, the external source of motion is preferably constituted by an electric motor 37 accommodated within the second compartment 15 of the second box-like container 13.

In particular, the electric motor 37 is connected to the belts and to the rollers by means of a kinematic transmission system that is constituted for example by a driving mechanism, generally designated by the reference numeral 38, which is also accommodated within the second compartment 15.

The driving mechanism 38, for example of the belt-pulley type, is conveniently connected to the free ends of the shafts 21a, 21b and 25a, 25b of the first and second rollers, and likewise to the free ends of the auxiliary shafts 18, 30 and 36 of the conveyor belts, said free ends passing through the rear wall 8, at the respective pivoting points, so as to protrude inside the second compartment 15.

The actuation and control of the driving of the rollers and belts on the part of the user can be performed from a console 39, which is associated externally with the frame 2, preferably at a region above the second box-like enclosure 13.

The operation of the invention is therefore as follows: with reference to the cited figures, the user, after starting the driving of belts and rollers by means of the console, can position the pre-sliced portions of meat at the first region 17a of the first conveyor belt 17.

The first conveyor belt introduces the portions into the first enclosure 5 until they fall from the third unloading region 19 toward the gap formed between the first rollers 20a and 20b, which rotate in mutually opposite directions about their axes.

The pre-sliced portions of meat introduced therein then undergo a first compression on the part of the first rollers 20a and 20b, from which they then fall approximately vertically within the gap between the underlying second rollers 24a and 24b.

The lubrication of the first and second rollers, and therefore the wetting of the portions of meat compressed by them, is ensured by the diffuse injection of water performed by the nozzles 28.

The portions are then subjected to a subsequent finishing compression, performed by the pair of second rollers 24a and 24b, which also rotate in mutually opposite directions, so as to cause a second fall of such portions of meat, this time at the second conveyor belt 29.

The second conveyor belt 29 guides the portions of processed meat to the third conveyor belt 32, which in turn conveys them back externally, allowing the user to pick them up conveniently at the fifth region 34, which is flat and substantially horizontal, of the third conveyor belt 32.

It has thus been found that the invention has achieved the intended aim and objects, a machine for processing meat, particularly for pounding, having been provided which allows to automate the operation, thus sparing the operators from having to perform tasks that are delicate and physically tiring.

It has also been found that the compression of the portions of meat by the lateral surfaces of the rollers allows to perform an excellent processing of the meat, keeping substantially unchanged its nutritional and organoleptic characteristics.

One can also note that this solution allows to increase significantly the production flow achieved on average by means of pounding operations performed manually.

The machine is further versatile and flexible, since it can be used in the processing of meats that have significantly variable dimensions; if it is necessary to process portions of meat that are particularly thin or thick, the machine can adapt easily by way of a simple adjustment of the distance that defines the gap that separates the first and/or second rollers.

The invention is of course susceptible of numerous modifications and variations, all of which are within the scope of the appended claims.

Thus, for example, the number of rollers and belts can be different from the one shown in the illustrated example; likewise, the path traced by the meat portions can be the most disparate according to requirements.

It is further possible to use conveyance and/or removal means that are different from the ones described and therefore to use chain-type mechanisms and/or mechanisms of the kind commonly known as slat conveyors.

It is also possible to provide for the presence of a conveyor that is suitable to facilitate the insertion of the meat portions between the first rollers; said conveyor can be constituted, for example, by an arc-like plate that protrudes inside the first enclosure, so as to be interposed between the unloading region of the first conveyance means and the gap between the pair of first rollers.

The materials employed, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The disclosures in Italian Patent Application No. TV2002A000060 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A meat processing machine, particularly for pounding, **characterized in that** it comprises a supporting frame for first means for conveying pre-sliced portions of meat toward at least one pair of first rotating rollers which are arranged so that their axis is approximately horizontal and lie side by side at a preset distance from each other, second means for removing said processed meat portions being associated with said frame below said first rollers.

2. The machine according to claim 1, **characterized in that** said frame comprises at least one box-like enclosure, inside which one or more compartments are formed for accommodating said at least one pair of first rollers.

3. The machine according to claims 1 and 2, **characterized in that** said one or more compartments available for inspection have one or more openings that are suitable for the partial outward protrusion of said first means for conveying said pre-sliced meat portions and of said second means for removing said processed meat portions.

4. The machine according to one or more of the preceding claims, **characterized in that** it comprises at least one pair of second rollers, which are arranged below said first pair of first rollers and above said second means for removing said processed meat portions.

5. The machine according to one or more of the preceding claims, **characterized in that** said first and second rollers, like said first and second means, are functionally connected to at least one source of motion by way of a suitable kinematic driving system.

6. The machine according to one or more of the preceding claims, **characterized in that** said frame comprises a footing that is provided in a lower region with a plurality of wheels for resting on the ground, which are suitable for moving said machine.

7. The machine according to claims 1, 2 and 6, **characterized in that** said frame comprises a first box-like enclosure that is shaped approximately like a parallelepiped and is associated, or monolithically coupled, above said footing and is provided at the front with a first door for inspecting a first compartment formed inside said first box-like enclosure.

8. The machine according to claims 1, 6 and 7, **characterized in that** said first enclosure has a rear wall that is part of a shoulder that is associated, or monolithically coupled, above said footing and protrudes from it.

9. The machine according to claims 1, 3 and 8, **characterized in that** said first box-like enclosure has a side wall that is adjacent to said shoulder and at which there is advantageously said at least one or more openings constituted by a first slot, which is substantially rectangular and approximately horizontal and is formed above a second slot whose shape and orientation are substantially similar to those of said first slot.

10. The machine according to one or more of the preceding claims, **characterized in that** said frame comprises a second box-like enclosure which is associated, or monolithically coupled, above said footing, has substantially the same shape as said first box-like enclosure, and is arranged adjacent to said wall that is part of said shoulder.

11. The machine according to claims 1, 8 and 10, **characterized in that** a second compartment is formed inside said second enclosure and can be inspected by opening a second door that is articulated to said second enclosure.

12. The machine according to claims 1 and 11, **characterized in that** said first means for conveying said pre-sliced meat portions are constituted by a first conveyor belt, which protrudes in front of said shoulder and lies on a substantially horizontal plane.

13. The machine according to one or more of the preceding claims, **characterized in that** said first conveyor belt is associated with said shoulder approximately at the same height as said first slot, so as to have a first region that is external to said first enclosure and a second region that is internal to said first enclosure, being accommodated within said first compartment.

14. The machine according to claims 1, 11 and 13, **characterized in that** said first conveyor belt is guided at its ends around two first auxiliary shafts, one of said auxiliary shafts being pivoted at said shoulder, the other one of said auxiliary shafts being pivoted inside said first compartment, at said rear wall.

15. The machine according to one or more of the preceding claims, **characterized in that** said first conveyor belt, which receives motion from said first auxiliary shafts, allows to convey said pre-sliced meat portions, rested beforehand on said first region by the user, into said first compartment, until they reach a third unloading region that is arranged above said first rollers accommodated in said first compartment.

16. The machine according to claims 1, 9 and 15, **characterized in that** said first unloading region, beyond which said pre-sliced meat portions fall into the gap between said first rollers, is arranged above and proximate to one of said first rollers, which is advantageously adjacent to said side wall.

17. The machine according to claims 11, 15 and 16, **characterized in that** said first rollers, which lie axially along a direction that is approximately perpendicular to said rear wall and have a substantially cylindrical shape, are keyed on a pair of first shafts, which are pivoted approximately at right angles to said rear wall.

18. The machine according to claims 4 and 17, **characterized in that** said second rollers, arranged below said first rollers within said first compartment, are also substantially cylindrical and lie axially along a direction that is preferably parallel to the direction of said first rollers, so as to form between said second rollers a chosen gap whose central axis is substantially aligned vertically with the central axis defined by the gap that passes between said first rollers.

19. The machine according to claims 17 and 18, **characterized in that** said second rollers are keyed on a pair of second shafts, which rotate in mutually opposite directions and are pivoted approximately at right angles to said rear wall.

20. The machine according to claims 17 and 18, **characterized in that** said first shafts have first free ends that are pivoted to a first spacer bar, which is suitable to increase the flexural rigidity of said first shafts.

21. The machine according to claims 18 and 19, **characterized in that** said second shafts have second free ends, which are pivoted to a second spacer bar, which is suitable to increase the flexural rigidity of said second shafts.

22. The machine according to one or more of the preceding claims, **characterized in that** said first compartment accommodates a plurality of nozzles, which protrude from two cross-members that are associated internally with said first enclosure along a direction that is substantially perpendicular to said rear wall.

23. The machine according to claims 20, 21 and 22, **characterized in that** said cross-members lie on the horizontal central plane that is equidistant from said first and second spacer bars, and are arranged in the gap between said first and second rollers.

24. The machine according to claims 18, 22 and 23, **characterized in that** said nozzles, arranged in succession, are mutually equidistant along said cross-members, with a plurality of orientations that are directed toward said first rollers, toward said second rollers, or also toward the gap between said first and second rollers.

25. The machine according to one or more of the preceding claims, **characterized in that** the lateral surfaces of said first and second rollers have a plurality of linear and/or concentric grooves, which are suitable to form a grid of protruding elements or blocks, which are uniformly distributed along rows and columns that are approximately mutually perpendicular, the blocks being substantially shaped like a truncated pyramid or truncated cone so as to allow to produce a chosen compression of said pre-sliced meat portions that pass between said first and second rollers.

26. The machine according to one or more of the preceding claims, **characterized in that** the directions of rotation of said first and second rollers are such as to determine, at the respective gaps, a coordinated downward movement so as to allow to follow said meat portions compressed thereat toward a second conveyor belt that is suitable to remove them.

27. The machine according to one or more of the preceding claims, **characterized in that** said second conveyor belt is arranged below said second rollers, approximately at the same height as said second slot, and is accommodated within said first compartment.

28. The machine according to one or more of the preceding claims, **characterized in that** said second conveyor belt, arranged on a horizontal plane, is guided around two second auxiliary shafts, which are pivoted at said rear wall.

29. The machine according to claims 27 and 28, **characterized in that** said second conveyor belt has a fourth end region, which is arranged above and proximate to a third conveyor belt, which constitutes, together with said second belt, said second means for removing said processed meat portions from said first compartment.

30. The machine according to claims 9, 28 and 29, **characterized in that** said third conveyor belt affects said second slot so as to form a fifth flat region that is accommodated both inside and outside said first compartment and is arranged obliquely with an upper orientation.

31. The machine according to claims 29 and 30, **characterized in that** said fifth region is longer at the region outside said first compartment, so that it connects in an upper region to a sixth region, which is also flat, is arranged outside said first compartment and horizontally, so as to form a configuration that is shaped approximately like an inverted letter V for said third belt.

32. The machine according to claims 12, 30 and 31, **characterized in that** said sixth region is arranged approximately on the same plane as said first conveyor belt and is adjacent thereto.

33. The machine according to claims 31 and 32, **characterized in that** said third conveyor belt is guided around third auxiliary shafts, which are arranged both at the free ends and at the connecting point between said fifth and sixth regions.

34. The machine according to one or more of the preceding claims, **characterized in that** one of said third auxiliary shafts, which forms the lower end of said third belt, is accommodated within said first compartment, below said second belt and proximate thereto, so as to allow to pivot said third auxiliary shaft approximately at right angles to said rear wall, the remaining third auxiliary shafts being pivoted approximately at right angles to said shoulder outside said first compartment.

35. The machine according to one or more of the preceding claims, **characterized in that** said first, second and third belts, and said first and second rollers, which are mutually synchronized, are functionally connected to said source of motion, which is preferably constituted by an electric motor that is accommodated within said second compartment.

36. The machine according to one or more of the preceding claims, **characterized in that** said electric motor is connected to said first and second means, and also to said first and second rollers, by way of said kinematic transmission system, which is constituted by a driving mechanism of the belt-pulley type accommodated within said second compartment.

37. The machine according to one or more of the preceding claims, **characterized in that** said mechanism is conveniently connected to the free ends of said first and second shafts and likewise to the free ends of said first, second and third auxiliary shafts, said free ends passing through said rear wall, at the respective pivoting points, so as to protrude inside said second compartment.

38. The machine according to one or more of the preceding claims, **characterized in that** the actuation and control of the movement of said first and second rollers and likewise of said first, second and third belts on the part of the user is performed from a console that is associated externally with said frame, preferably at a region that lies above said second box-like enclosure.

39. The machine according to one or more of the preceding claims, **characterized in that** it comprises a conveyor that is suitable to facilitate the insertion of said pre-sliced portions of meat between said first rollers, said conveyor being constituted by an arc-like plate that protrudes inside said first enclosure, so as to be interposed between said third unloading region of said first belt and the gap that is present between said first rollers.
